# EUROPEAN PATENT SPECIFICATION

(11) **EP 2 884 105 B1**
(45) Date of publication and mention of the grant of the patent: **25.01.2017**
(21) Application number: 14196592.1
(22) Date of filing: 05.12.2014
(51) Int. Cl.: F04B 27/10, F04B 27/12

(54) **Variable displacement swash plate type compressor**
Taumelscheibenverdichter mit variabler Kapazität
Compresseur à déplacement variable de type plateau oscillant

(30) Priority: 16.12.2013 JP 2013258827
(43) Date of publication of application: 17.06.2015
(73) Proprietor: KABUSHIKI KAISHA TOYOTA JIDOSHOKKI, Kariya-shi, Aichi-ken, 448-8671 (JP)
(72) Inventor: Yamamoto, Shinya, Kariya-shi, Aichi-ken, 448-8671 (JP); Suzuki, Takahiro, Kariya-shi, Aichi-ken, 448-8671 (JP); Honda, Kazunari, Kariya-shi, Aichi-ken, 448-8671 (JP); Nishii, Kei, Kariya-shi, Aichi-ken, 448-8671 (JP)
(74) Representative: Winter, Brandl, Fürniss, Hübner, Röss, Kaiser, Polte - Partnerschaft mbB

(56) References cited:
- EP-A2- 2 009 284
- US-A- 5 231 914
- US-A1- 2002 073 722
- US-A1- 2013 089 445

## Description

### TECHNICAL FIELD

The present invention relates to a variable displacement swash plate type compressor.

### BACKGROUND ART

Japanese Patent Laid-Open No. 8-105384 discloses a conventional variable displacement swash plate type compressor (hereinafter referred to as compressor). In the compressor, a housing is formed by a front housing, a cylinder block, and a rear housing. A suction chamber and a discharge chamber are respectively formed in the front housing and the rear housing. A pressure regulation chamber is formed in the rear housing.

In the cylinder block, a swash plate chamber, a plurality of cylinder bores, and a center bore are formed. The center bore is formed on a rear side of the cylinder block.

A drive shaft is inserted through the housing and is rotatably supported in the housing. A swash plate rotatable by the rotation of the drive shaft is provided in the swash plate chamber. A link mechanism that allows a change in an inclination angle of the swash plate is provided between the drive shaft and the swash plate. Here, the inclination angle is an angle formed by the swash plate with respect to a direction orthogonal to a rotational axis of the drive shaft.

In the respective cylinder bores, pistons are respectively accommodated to be reciprocatingly movable. Compression chambers are respectively formed in the cylinder bores. A conversion mechanism is configured to reciprocatingly move the pistons in the cylinder bores at a stroke corresponding to the inclination angle according to the rotation of the swash plate. An actuator is capable of changing the inclination angle. A control mechanism is configured to control the actuator.

The actuator includes a first movable body, a second movable body, a thrust bearing, and a control pressure chamber. The first movable body is arranged in the center bore and is movable in the center bore in a rotational axis direction. In the first movable body, a shaft hole, through which a rear end portion of the drive shaft is inserted, is formed. Consequently, the rear end portion of the drive shaft is rotatable in the shaft hole of the first movable body. An O-ring and a pair of sealing rings are provided between the outer circumferential surface of the first movable body and the inner circumferential surface of the center bore.

The second movable body is inserted through the drive shaft. The second movable body is arranged in the front of the first movable body and is movable in the rotational axis direction. The thrust bearing is provided between the first movable body and the second movable body.

The control pressure chamber is formed on the rear end side of the center bore because the first movable body is arranged in the center bore. The control pressure chamber communicates with the pressure regulation chamber. The pressure regulation chamber and the control pressure chamber are partitioned from the swash" plate chamber by the above explained the O-ring and the sealing rings.

The control mechanism performs communication control between the control pressure chamber and the suction chamber and performs communication control between the control pressure chamber and the discharge chamber to thereby regulate the pressure of a refrigerant in the control pressure chamber.

In the compressor, the control mechanism is capable of moving the first and second movable bodies and the thrust bearing in the rotational axis direction by regulating the pressure of the refrigerant in the control pressure chamber. Consequently, in the compressor, the link mechanism allows a change in the inclination angle of the swash plate and is capable of changing a discharge capacity per one rotation of the drive shaft.

However, in the above explained conventional compressor, there is a concern that lubrication between the drive shaft and the shaft hole is insufficient, seizure occurs here, and durability is deteriorated.

The present invention has been devised in view of the above explained the actual situations in the past and a problem to be solved by the present invention is to provide a variable displacement swash plate type compressor capable of displaying high durability in a compressor that changes a discharge capacity using an actuator.

From US5231914 a variable displacement swash plate type compressor is known, comprising:
a housing in which a suction chamber, a discharge chamber, a swash plate chamber,
and a cylinder bore are formed;
a drive shaft rotatably supported by the housing;
a swash plate rotatable in the swash plate chamber by rotation of the drive shaft;
a link mechanism provided between the drive shaft and the swash plate and configured to allow a change in an inclination angle of the swash plate with respect to a direction orthogonal to a rotational axis of the drive shaft;
a piston accommodated to be reciprocatingly movable in the cylinder bore;
a conversion mechanism configured to reciprocatingly move the piston in the cylinder bore at a stroke corresponding to the inclination angle according to the rotation of the swash plate;
an actuator capable of changing the inclination angle; and
a control mechanism configured to control the actuator, wherein
the swash plate chamber communicates with the suction chamber.

The actuator includes a control pressure chamber defined by the fixed body (part of the housing) and the movable body (on the shaft) and configured to introduce a refrigerant including lubricant in the discharge chamber to thereby move the movable body, in the housing, a pressure regulation chamber that communicates with the discharge chamber and the control pressure chamber and a shaft hole that allows the swash plate chamber and the pressure regulation chamber to communicate with each other are formed, in the shaft hole, a bearing rotatably supporting the drive shaft is arranged.

### SUMMARY OF THE INVENTION

A variable displacement swash plate type compressor of the present invention comprises : a housing in which a suction chamber, a discharge chamber, a swash plate chamber, and a cylinder bore are formed; a drive shaft rotatably supported by the housing; a swash plate rotatable in the swash plate chamber by the rotation of the drive shaft; a link mechanism provided between the drive shaft and the swash plate and configured to allow a change in an inclination angle of the swash plate with respect to a direction orthogonal to a rotational axis of the drive shaft; a piston accommodated to be reciprocatingly movable in the cylinder bore; a conversion mechanism configured to reciprocatingly move the piston in the cylinder bore at a stroke corresponding to the inclination angle according to the rotation of the swash plate; an actuator capable of changing the inclination angle; and a control mechanism configured to control the actuator. The swash plate chamber communicates with the suction chamber. The actuator includes: a fixed body fixed to the drive shaft in the swash chamber; a movable body movable in the rotational axis direction in the swash plate chamber; and a control pressure chamber defined by the fixed body and the movable body and configured to introduce a refrigerant including lubricant in the discharge chamber to thereby move the movable body. In the housing, a pressure regulation chamber that communicates with the discharge chamber and the control pressure chamber and a shaft hole that allows the swash plate chamber and the pressure regulation chamber to communicate with each other are formed. In the shaft hole, a bearing rotatably supporting the drive shaft is arranged. A communication path that allows the pressure regulation chamber and the swash plate chamber to communicate with each other via the bearing is provided between the drive shaft and the shaft hole. In the communication path, an annular member arranged around the drive shaft is provided. The annular member includes an aperture that allows the pressure regulation chamber and the swash plate chamber to always communicate with each other. The annular member moves in the communication path on the basis of a pressure difference between the pressure regulation chamber and the swash plate chamber to thereby adjust a flow rate of the refrigerant circulating through the communication path.

Other aspects and advantages of the present invention will be apparent from embodiments disclosed in the attached drawings, illustrations exemplified therein, and the concept of the present invention.

### BRIEF DESCRIPTION OF THE DRAWINGS

FIG. 1 is a sectional view at a time of a maximum capacity in a compressor in embodiment 1.
FIG. 2 is a schematic diagram showing a control mechanism, according to the compressor of embodiment 1.
FIG. 3 is an essential part enlarged sectional view showing rear end portion of a drive shaft, according to the compressor of embodiment 1.
FIG. 4A is a top perspective view showing first and second annular members, according to the compressor of embodiment 1.
Fig. 4B is an essential part enlarged front view showing the first and second annular members, according to the compressor of embodiment 1.
FIG. 4C is an enlarged sectional view seen in a direction of arrows C-C in FIG. 4B.
FIG. 5A is an essential part enlarged sectional view showing a position of the first annular member in a first recessed strip portion and a position of the second annular member in a second recessed strip portion and showing positions of the first and second annular members in a state in which a pressure difference between a pressure regulation chamber and a swash plate chamber is large, according to the compressor of embodiment 1.
FIG. 5B is an essential part enlarged sectional view showing a position of the first annular member in a first recessed strip portion and a position of the second annular member in a second recessed strip portion and showing positions of the first and second annular members in a state in which the pressure difference between the pressure regulation chamber and the swash chamber is small, according to the compressor of embodiment 1.
FIG. 6 is a sectional view at a time of a minimum capacity in the compressor in embodiment 1.
FIG. 7 is an essential part enlarged sectional view showing a rear end portion of a drive shaft, according to a compressor of embodiment 2.
FIGS. 8A is a top perspective view showing the first and second annular members, according to a compressor of embodiment 3.
FIG. 8B is an essential part enlarged front view showing the first and second annular members, according to a compressor of embodiment 3.
FIG. 8C is an enlarged sectional view seen in a direction of arrow C-C in FIG. 8B.

### DETAILED DESCRIPTION OF EXEMPLARY EMBODIMENTS

Embodiments 1 to 3 embodying the present invention are explained below with reference to the drawings. Compressors in embodiments 1 to 3 are variable displacement swash plate type compressors. All of the compressors are mounted on a vehicle and configure a refrigeration circuit of an air-conditioning apparatus for a vehicle.

### (Embodiment 1)

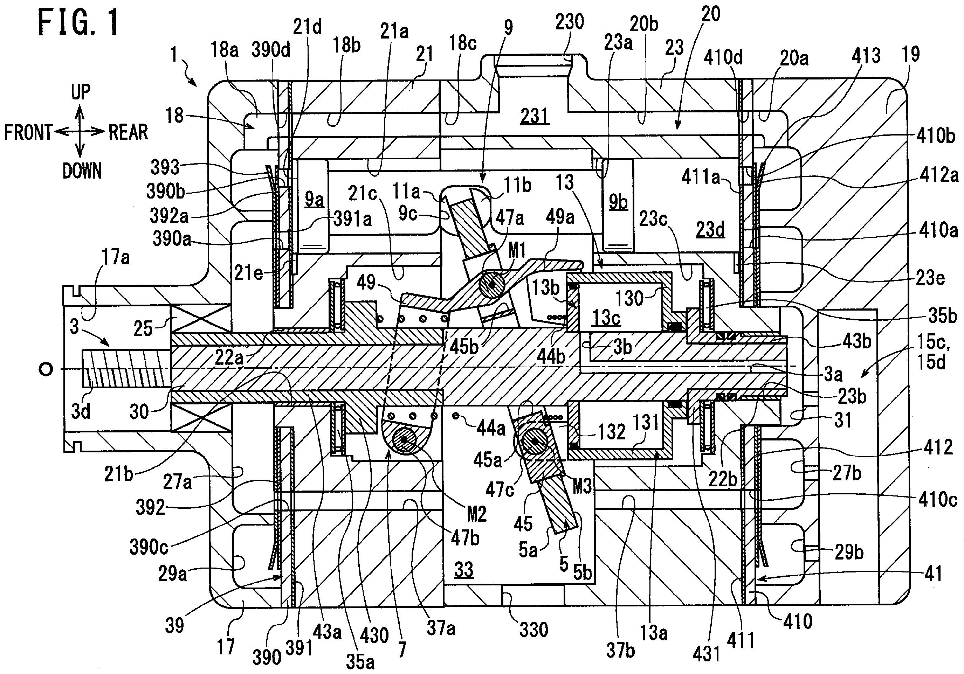

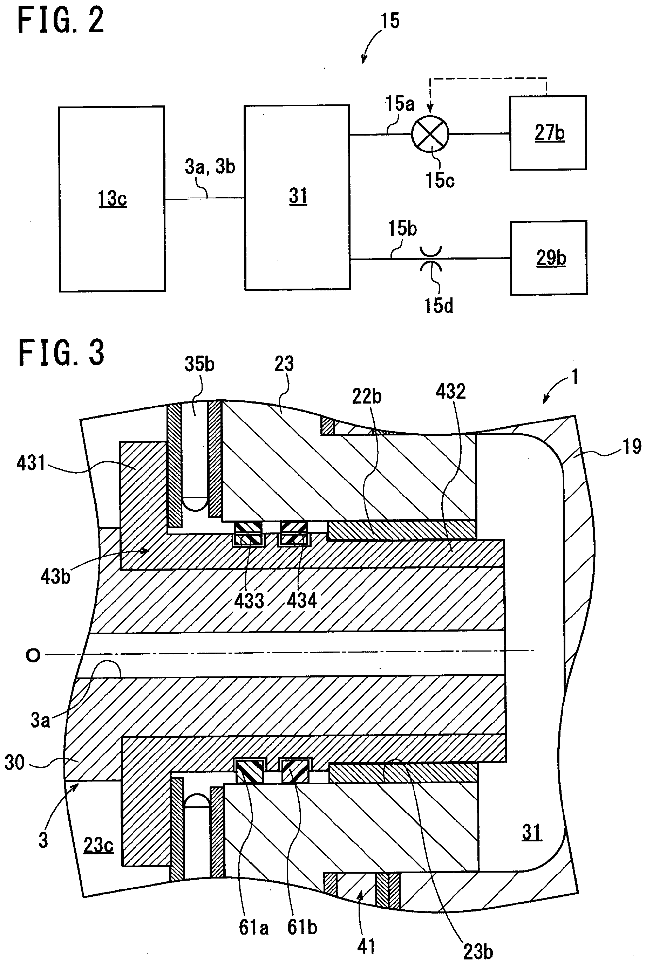

As shown in FIG. 1, the compressor in embodiment 1 includes a housing 1, a drive shaft 3, a swash plate 5, a link mechanism 7, a plurality of pistons 9, a pair of shoes 11a and 11b, an actuator' 13, and a control mechanism 15 shown in FIG. 2.

As shown in FIG. 1, the housing 1 includes a front housing 17 located in the front of the compressor, a rear housing 19 located in the rear of the compressor, first and second cylinder blocks 21 and 23 located between the front housing 17 and the rear housing 19, and first and second valve forming plates 39 and 41.

In the front housing 17, a boss 17a projecting forward is formed. A shaft seal device 25 is provided in the boss 17a. In the front housing 17, a first suction chamber 27a and a first discharge chamber 29a are formed. The first suction chamber 27a is located on the inner circumferential side of the front housing 17. The first discharge chamber 29a is formed in an annular shape and is located on the outer circumferential side of the first suction chamber 27a in the front housing 17.

Further, in the front housing 17, a first front side communication path 18a is formed. The front end side of the first front side communication path 18a communicates with the first discharge chamber 29a. The rear end side of the first front side communication path 18a opens to the rear end of the front housing 17.

In the rear housing 19, the above explained control mechanism 15 is provided. In the rear housing 19, a second suction chamber 27b, a second discharge chamber 29b, and a pressure regulation chamber 31 are formed. The pressure regulation chamber 31 is located in a center portion of the rear housing 19. The second suction chamber 27b is formed in an annular shape and is located on the outer circumferential side of the pressure regulation chamber 31 in the rear housing 19. The second discharge chamber 29b is also formed in an annular shape and is located on the outer circumferential side of the second suction chamber 27b in the rear housing 19.

Further, in the rear housing 19, a first rear side communication path 20a is formed. The rear end side of the first rear side communication path 20a communicates with the second discharge chamber 29b. The front end side of the first rear side communication path 20a opens to the front end of the rear housing 19.

A swash plate chamber 33 is formed between the first cylinder block 21 and the second cylinder block 23. The swash plate chamber 33 is located in substantially the center in the front-rear direction in the housing 1.

In the first cylinder block 21, a plurality of first cylinder bores 21a are formed in the circumferential direction at equal angle intervals in parallel to one another. In the first cylinder block 21, a first shaft hole 21b, through which the drive shaft 3 is inserted, is formed. In the first shaft hole 21b, a first sliding bearing 22a is provided. Note that a roller bearing may be provided instead of the first sliding bearing 22a.

Further, in the first cylinder block 21, a first recessed portion 21c communicating with the first shaft hole 21b and coaxial with the first shaft hole 21b is formed. The first recessed portion 21c communicates with the swash plate chamber 33 and forms a part of the swash plate chamber 33. The first recessed portion 21c is formed in a shape reduced in diameter stepwise toward the front end. At the front end of the first recessed portion 21c, a first thrust bearing 35a is provided. Further, in the first cylinder block 21, a first communication path 37a, which allows the swash plate chamber 33 and the first suction chamber 27a to communicate with each other, is formed. In the first cylinder block 21, a first retainer groove 21e, which regulates a maximum opening degree of first suction reed valves 391a explained below, is recessed.

Further, in the first cylinder block 21, a second front side communication path 18b is formed. The front end of the second front side communication path 18b opens to the front end side of the first cylinder block 21. The rear end of the second front side communication path 18b opens to the rear end side of the first cylinder block 21.

In the second cylinder block 23, as in the first cylinder block 21, a plurality of second cylinder bores 23a are formed. The second cylinder bores 23a form pairs with the first cylinder bores 21a in the front and the rear. The first cylinder bores 21a and the second cylinder bores 23a are formed in the same diameter.

In the second cylinder block 23, a second shaft hole 23b, through which the drive shaft 3 is inserted, is formed. The second shaft hole 23b communicates with the pressure regulation chamber 31 on the rear end side. The second shaft hole 23b is equivalent to the shaft hole in the present invention. In the second shaft hole 23b, a second sliding bearing 22b is provided. The second sliding bearing 22b is equivalent to the radial bearing in the present invention. Note that a roller bearing may be provided instead of the second sliding bearing 22b.

In the second cylinder block 23, a second recessed portion 23c communicating with the second shaft hole 23b and coaxial with the second shaft hole 23b is formed. The second recessed portion 23c also communicates with the swash plate chamber 33 and forms a part of the swash plate chamber 33. Consequently, the second shaft hole 23b communicates with the swash plate chamber 33 on the front end side. The second recessed portion 23c is formed in a shape reduced in diameter stepwise toward the rear end. A second thrust bearing 35b is provided at the rear end of the second recessed portion 23c. Further, in the second cylinder block 23, a second communication path 37b, which allows the swash plate chamber 33 and the second suction chamber 27b to communicate with each other, is formed. In the second cylinder block 23, a second retainer groove 23e, which regulates a maximum opening degree of second suction reed valves 411a explained below, is recessed.

In the second cylinder block 23, a discharge port 230, a confluent delivery chamber 231, a third front side communication path 18c, a second rear side communication path 20b, and a suction port 330 are formed. The discharge port 230 and the confluent delivery chamber 231 communicate with each other. The confluent delivery chamber 231 is connected to a not-shown condenser, which configures a conduit, via the discharge port 230.

The front end side of the third front side communication path , 18c opens to the front end of the second cylinder block 23. The rear end side of the third front side communication path 18c communicates with the confluent delivery chamber 231. The first cylinder block 21 and the second cylinder block 23 are joined, whereby the third front side communication path 18c communicates with the rear end side of the second front side communication path 18b.

The front end side of the second rear side communication path 20b communicates with the confluent delivery chamber 231. The rear end side of the second rear side communication path 20b opens to the rear end of the second cylinder block 23.

The suction port 330 is formed in the second cylinder block 23. The swash plate chamber 33 is connected to a not-shown evaporator, which configures the conduit, via the suction port 330.

The first valve forming plate 39 is provided between the front housing 17 and the first cylinder block 21. The second valve forming plate 41 is provided between the rear housing 19 and the second cylinder block 23.

The first valve forming plate 39 includes a first valve plate 390, a first suction valve plate 391, a first discharge valve plate 392, and a first retainer plate 393. In the first valve plate 390, the first discharge valve plate 392, and the first retainer plate 393, first suction holes 390a as many as the first cylinder bores 21a are formed. In the first valve plate 390 and the first suction valve plate 391, first discharge holes 390b as many as the first cylinder bores 21a are formed. Further, in the first valve plate 390, the first suction valve plate 391, the first discharge valve plate 392, and the first retainer plate 393, first suction communication holes 390c are formed. In the first valve plate 390 and the first suction valve plate 391, first discharge communication holes 390d are formed.

The first cylinder bores 21a communicate with the first suction chamber 27a through the first suction holes 390a. The first cylinder bores 21a communicate with the first discharge chamber 29a through the first discharge holes 390b. The first suction chamber 27a and the first communication path 37a communicate with each other through the first suction communication holes 390c. A first front side communication path 18a and a second front side communication path 18b communicate with each other through the first discharge communication holes 390d.

The first suction valve plate 391 is provided on the rear surface of the first valve plate 390. In the first suction valve plate 391, a plurality of first suction reed valves 391a capable of opening and closing the first suction holes 390a through elastic deformation are formed. The first discharge valve plate 392 is provided on the front surface of the first valve plate 390. In the first discharge valve plate 392, a plurality of first discharge reed valves 392a capable of opening and closing the first discharge holes 390b through elastic deformation are formed. The first retainer plate 393 is provided on the front surface of the first discharge valve plate 392. The first retainer plate 393 regulates a maximum opening degree of the first discharge reed valves 392a.

The second valve forming plate 41 includes a second valve plate 410, a second suction valve plate 411, a second discharge valve plate 412, and a second retainer plate 413. In the second valve plate 410, the second discharge valve plate 412, and the second retainer plate 413, second suction holes 410a as many as the second cylinder bores 23a are formed. In the second valve plate 410 and the second suction valve plate 411, second discharge holes 410b as many as the second cylinder bores 23a are formed. Further, in the second valve plate 410, the second suction valve plate 411, the second discharge valve plate 412, and the second retainer plate 413, second suction communication holes 410c are formed. In the second valve plate 410 and the second suction valve plate 411, second discharge communication holes 410d are formed.

The second cylinder bores 23a communicate with the second suction chamber 27b through the second suction holes 410a. The second cylinder bores 23a communicate with the second discharge chamber 29b through the second discharge holes 410b. The second suction chamber 27b and the second communication path 37b communicate with each other through the second suction communication holes 410c. The first rear side communication path 20a and the second rear side communication path 20b communicate with each other through the second discharge communication holes 410d.

The second suction valve plate 411 is provided on the front surface of the second valve plate 410. In the second suction valve plate 411, a plurality of second suction reed valves 411a capable of opening and closing the second suction holes 410a through elastic deformation are formed. The second discharge valve plate 412 is provided on the rear surface of the second valve plate 410. In the second discharge valve plate 412, a plurality of second discharge reed valves 412a capable of opening and closing the second discharge holes 410b through elastic deformation are formed. The second retainer plate 413 is provided on the rear surface of the second discharge valve plate 412. The second retainer plate 413 regulates a maximum opening degree of the second discharge reed valves 412a.

In the compressor, a first discharge communication path 18 is formed by the first front side communication path 18a, the first discharge communication holes 390d, the second front side communication path 18b, and the third front side communication path 18c. A second discharge communication path 20 is formed by the first rear side communication path 20a, the second discharge communication holes 410d, and the second rear side communication path 20b.

In the compressor, the first and second suction chambers 27a and 27b and the swash plate chamber 33 communicate with each other through the first and second communication paths 37a and 37b and the first and second suction communication holes 390c and 410c. Therefore, pressures in the first and second suction chambers 27a and 27b and in the swash plate chamber 33 are substantially equal. A low-pressure refrigerant gas passed through the evaporator flows into the swash plate chamber 33 through the suction port 330. Therefore, the pressures in the swash plate chamber 33 and in the first and second suction chambers 27a and 27b are lower than pressure in the first and second discharge chambers 29a and 29b.

The drive shaft 3 is configured by a drive shaft main body 30, a first supporting member 43a, and a second supporting member 43b. The drive shaft main body 30 extends from the front side to the rear side of the housing 1. The drive shaft main body 30 is inserted rearward from the boss 17a and inserted through the first and second sliding bearings 22a and 22b. Consequently, the drive shaft main body 30, and by extension, the drive shaft 3 are axially supported by the housing 1 to be rotatable around a rotational axis O. The front end of the drive shaft main body 30 is located in the boss 17a. The rear end of the drive shaft main body 30 projects into the pressure regulation chamber 31.

In the drive shaft main body 30, the swash plate 5, the link mechanism 7, and the actuator 13 are provided. The swash plate 5, the link mechanism 7, and the actuator 13 are respectively arranged in the swash plate chamber 33.

The first supporting member 43a is pressed into the front end side of the drive shaft main body 30 and located between the drive shaft main body 30 and the first sliding bearing 22a in the first shaft hole 21b. In the first supporting member 43a, a flange 430, which comes into contact with the first thrust bearing 35a, is formed and an attaching portion (not shown in the figure), through which a second pin 47b explained below is inserted, is formed. Further, the front end of a first return spring 44a is fixed to the first supporting member 43a. The first return spring 44a extends from the first supporting member 43a side to the swash plate chamber 33 side in the rotational axis O direction.

As shown in FIG. 3, the second supporting member 43b is pressed into the rear end side of the drive shaft main body 30 and located between the drive shaft main body 30 and the second sliding bearing 22b in the second shaft hole 23b. The second supporting member 43b is equivalent to the cap in the present invention. A flange 431 is formed at the front end of the second supporting member 43b. The flange 431 projects into the second recessed portion 23c and is in contact with the second thrust bearing 35b. In the second supporting member 43b, a reduced diameter portion 432 is formed on the rear end side. The rear end of the reduced diameter portion 432 projects into the pressure regulation chamber 31.

Further, in the second supporting member 43b, first and second recessed strip portions 433 and 434 concentric with the rotational axis O are recessed in a position between the flange 431 and the reduced diameter portion 432. The first and second recessed strip portions 433 and 434 allow the pressure regulation chamber 31 and the swash plate chamber 33 to communicate with each other via the second sliding bearing 22b. A first annular member 61a is accommodated in the first recessed strip portion 433. A second annular member 61b is housed in the second recessed strip portion 434. Consequently, the first and second annular members 61a and 61b are located between the second supporting member 43b and the second shaft hole 23b.

The second sliding bearing 22b is pressed into the reduced diameter portion 432. In this way, the second sliding bearing 22b is provided in the second shaft hole 23b and located on the rear end side of the second shaft hole 23b. Since the second sliding bearing 22b is located on the rear end side of the second shaft hole 23b, in the compressor, the second sliding bearing 22b is arranged further on the pressure regulation chamber 31 side than the first and second annular members 61a and 61b in the second shaft hole 23b. The rear end of the second sliding bearing 22b faces the pressure regulation chamber 31.

The outer diameter of the first annular member 61a, the outer diameter of the second annular member 61b, and the outer diameter of the second sliding bearing 22b are formed substantially the same. Consequently, in the compressor, all of the outer circumferential surface of the first annular member 61a, the outer circumferential surface of the second annular member 61b, and the outer circumferential surface of the second sliding bearing 22b are capable of coming into slide contact with the inner circumferential surface of the second shaft hole23b.

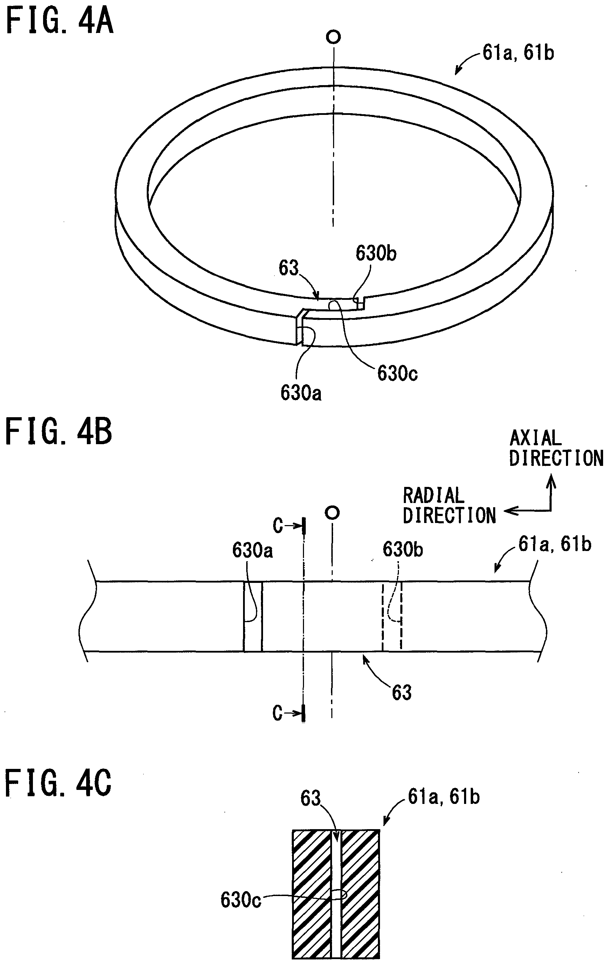

Both the first and second annular members 61a and 61b are made of PEEK. The first and second annular members 61a and 61b have the same configuration. As shown in FIG. 4A, the first and second annular members 61a and 61b respectively include joint gap 63. The configuration is explained below with reference to the joint gap 63 of the first annular member 61a as an example.

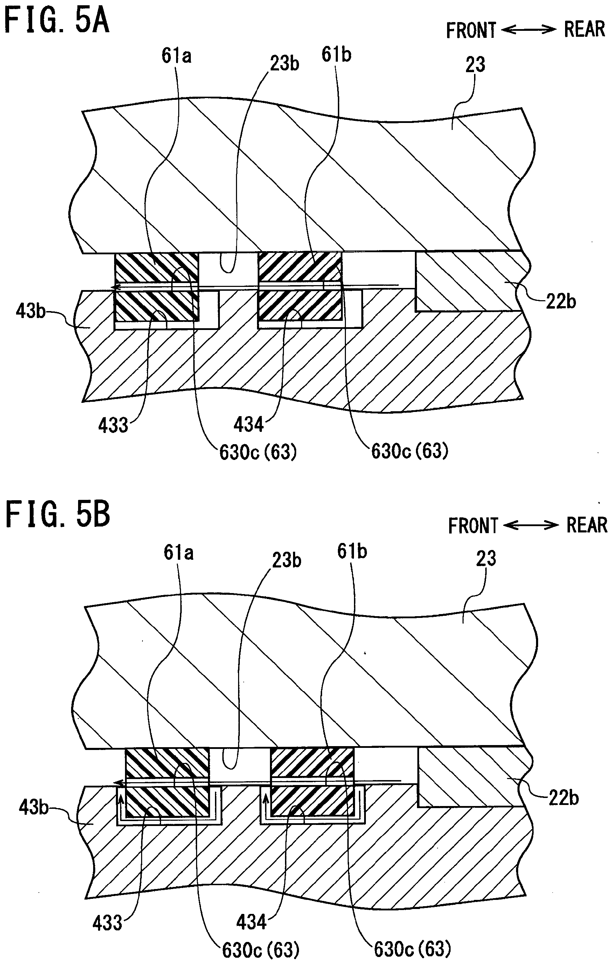

As shown in FIG. 4B, the joint gap 63 is formed by first to third cutouts 630a to 630c. The first cutout 630a extends in the axial direction of the first annular member 61a. The second cutout 630b extends in the axial direction of the first annular member 61a while shifting in the circumferential direction with respect to the first cutout 630a. The third cutout 630c extends in the circumferential direction in the center in the thickness direction of the first annular member 61a and is continuous to the first cutout 630a and the second cutout 630b. The joint gap 63 is formed in a crank shape by the first to third cutouts 630a to 630c. As shown in FIGS. 5A and 5B, the annular members 61a and 61b are respectively provided in the first and second recessed strip portions 433 and 434, whereby the third cutout 630c allows the pressure regulation chamber 31 and the swash plate chamber 33 to always communicate with each other. Therefore, as indicated by solid line arrows in the figure, lubricant included in the refrigerant can circulate through the third cutout 630c together with the refrigerant.

As shown in FIG. 4C, in the joint gap 63, the third cutout 630c is formed to have a small channel area for the refrigerant and the like compared with the first and second cutouts 630a and 630b. Consequently, the third cutout 630c functions as an aperture in the first and second annular members 61a and 61b. A portion between the second shaft hole 23b and the second supporting member 43b, the first and second recessed strip portions 433 and 434, and the third cutouts 630c function as the communication path in the present invention. Note that the annular members 61a and 61b may be formed by metal or the like.

As shown in FIG. 3, in the compressor, the second shaft hole 23b and the pressure regulation chamber 31 are defined by the first and second annular members 61a and 61b. As explained above, the joint gap 63 are respectively formed in the first and second annular members 61a and 61b. Therefore, it is possible to allow the second shaft hole 23b and the pressure regulation chamber 31 to communicate with each other through the joint gap 63.

As shown in FIG. 1, the swash plate 5 is formed in an annular flat plate shape and includes a front surface 5a and a rear surface 5b. The front surface 5a faces the front of the compressor in the swash plate chamber 33. The rear surface 5b faces the rear of the compressor in the swash plate chamber 33.

The swash plate 5 is fixed to a ring plate 45. The ring plate 45 is formed in an annular flat plate shape. An insertion hole 45a is formed in a center portion of the ring plate 45. The drive shaft main body 30 is inserted through the insertion hole 45a in the swash plate chamber 33, whereby the swash plate 5 is attached to the drive shaft 3.

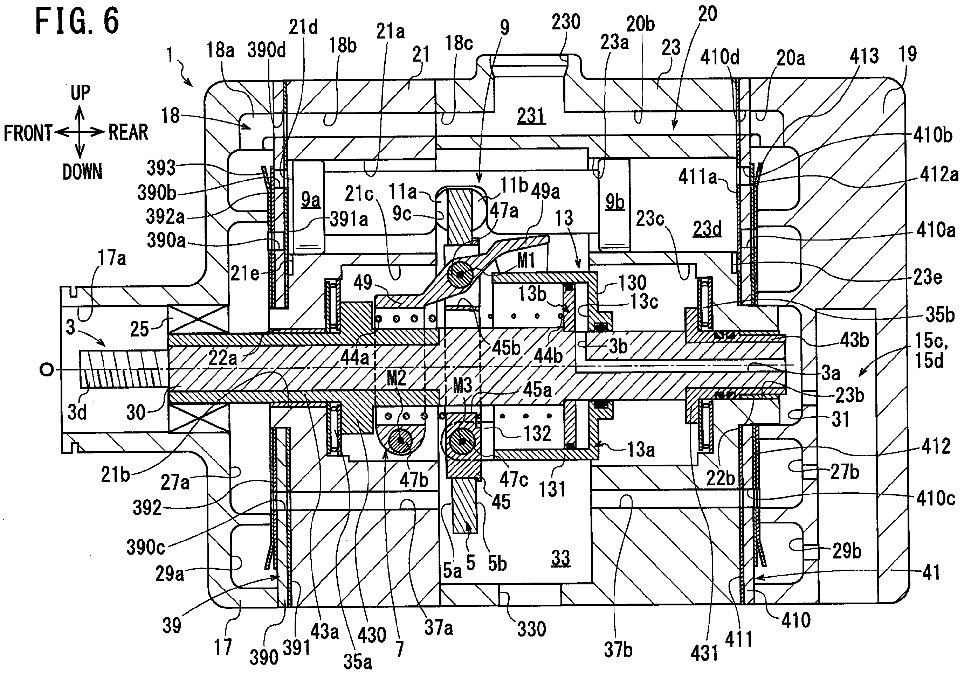

The link mechanism 7 includes a lug arm 49. The lug arm 49 is arranged further in the front than the swash plate 5 in the swash plate chamber 33 and located between the swash plate 5 and the first supporting member 43a. The lug arm 49 is formed to have a substantially L shape from the front end side to the rear end side. As shown in FIG. 6, the lug arm 49 comes into contact with the flange 430 of the first supporting member 43a when an inclination angle of the swash plate 5 with respect to the rotational axis O is the smallest. A weight portion 49a is formed on the rear end side of the lug arm 49. The weight portion 49a extends in the circumferential direction of the actuator 13 over a half circumference thereof. Note that the shape of the weight portion 49a can be designed as appropriate.

As shown in FIG. 1, the rear end side of the lug arm 49 is connected to one end side of the ring plate 45 by a first pin 47a. Consequently, with the axis of the first pin 47a set as a first pivot axis M1, the front end side of the lug arm 49 is pivotably supported around the first pivot axis M1 with respect to one end side of the ring plate 45, that is, the swash plate 5. The first pivot axis M1 extends in a direction orthogonal to the rotational axis O of the drive shaft 3.

The front end side of the lug arm 49 is connected to the first supporting member 43a by a second pin 47b. Consequently, with the axis of the second pin 47b set as a second pivot axis M2, the rear end side of the lug arm 49 is pivotably supported around the second pivot axis M2 with respect to the first supporting member 43a, that is, the drive shaft 3. The second pivot axis M2 extends in parallel to the first pivot axis M1. The lug arm 49 and the first and second pins 47a and 47b are equivalent to the link mechanism 7 in the present invention.

The weight portion 49a is provided to extend to the rear end side of the lug arm 49, that is, the opposite side of the second pivot axis M2 with respect to the first pivot axis M1. Therefore, the lug arm 49 is supported on the ring plate 45 by the first pin 47a, whereby the weight portion 49a is located on the rear surface of the ring plate 45, that is, the rear surface 5b side of the swash plate 5 through a groove portion 45b of the ring plate 45. A centrifugal force generated by the rotation of the swash plate 5 around the rotational axis O acts on the weight portion 49a on the rear surface 5b side of the swash plate 5.

In the compressor, the swash plate 5 and the drive shaft 3 are connected by the link mechanism 7, whereby the swash plate 5 is capable of rotating together with the drive shaft 3. Both ends of the lug arm 49 respectively pivot around the first pivot axis M1 and the second pivot axis M2, whereby the swash plate 5 is capable of changing the inclination angle.

The pistons 9 respectively include first head portions 9a on the front end side and include second head portions 9b on the rear end side. The first head portions 9a are accommodated to be reciprocatingly movable in the first cylinder bores 21a. First compression chambers 21d are respectively defined in the first cylinder bores 21a by the first head portions 9a and the first valve forming plate 39. The second head portions 9b are accommodated to be reciprocatingly movable in the second cylinder bores 23a. Second compression chambers 23d are respectively defined in the second cylinder bores 23a by the second head portions 9b and the second valve forming plate 41.

Engaging portions 9c are formed in the centers of the pistons 9. Semispherical shoes 11a and 11b are respectively provided in the engaging portions 9c. The rotation of the swash plate 5 is converted into reciprocating movement of the pistons 9 by the shoes 11a and 11b. The shoes 11a and 11b are equivalent to the conversion mechanism in the present invention. Consequently, the first and second head portions 9a and 9b are respectively capable of reciprocatingly moving in the first and second cylinder bores 21a and 23a at a stroke corresponding to the inclination angle of the swash plate 5.

Here, in the compressor, a stroke of the pistons 9 changes according to a change in the inclination angle of the swash plate 5, whereby top dead center positions of the first head portion 9a and the second head portion 9b move. Specifically, as the inclination angle of the swash plate 5 decreases, the top dead center position of the second head portion 9b more largely moves than the top dead center position of the first head portion 9a.

As shown in FIG. 1, the actuator 13 is arranged in the swash plate chamber 33. The actuator 13 is located further on the rear side than the swash plate 5 and is capable of entering the second recessed portion 23c. The actuator 13 includes a movable body 13a, a fixed body 13b, and a control pressure chamber 13c. The control pressure chamber 13c is formed between the movable body 13a and the fixed body 13b.

The movable body 13a includes a main body portion 130 and a circumferential wall 131. The main body portion 130 is located in the rear of the movable body 13a and extends in the radial direction in a direction away from the rotational axis O. The circumferential wall 131 is continuous to the outer circumferential edge of the main body portion 130 and extends from the front to the rear. A coupling portion 132 is formed at the front end of the circumferential wall 131. The movable body 13a is formed in a bottomed cylindrical shape by the main body portion 130, the circumferential wall 131, and the coupling portion 132.

The fixed body 13b is formed in a disk shape having a diameter substantially the same as the inner diameter of the movable body 13a. A second return spring 44b is provided between the fixed body 13b and the ring plate 45. Specifically, the rear end of the second return spring 44b is fixed to the fixed body 13b. The front end of the second return spring 44b is fixed to the other end side of the ring plate 45.

The drive shaft main body 30 is inserted through the movable body 13a and the fixed body 13b. Consequently, in a state in which the movable body 13a is accommodated in the second recessed portion 23c, the movable body 13a is arranged to be opposed to the link mechanism 7 across the swash plate 5. On the other hand, the fixed body 13b is arranged in the movable body 13a further in the rear than the swash plate 5 and is surrounded by the circumferential wall 131. Consequently, the control pressure chamber 13c is formed a space between the movable body 13a and the fixed body 13b. The control pressure chamber 13c is partitioned from the swash plate chamber 33 by the main body portion 130 and the circumferential wall 131 of the movable body 13a and the fixed body 13b.

In the compressor, since the drive shaft main body 30 is inserted through the movable body 13a, the movable body 13a is rotatable together with the drive shaft 3 and is capable of moving in the rotational axis O direction of the drive shaft 3 in the swash plate chamber 33. On the other hand, the fixed body 13b is fixed to the drive shaft main body 30 in a state in which the fixed body 13b is inserted through the drive shaft main body 30. Consequently, the fixed body 13b is capable of only rotating together with the drive shaft 3 and is incapable of moving like the movable body 13a. In this way, in moving in the rotational axis O direction, the movable body 13a relatively moves with respect to the fixed body 13b.

The other end side of the ring plate 45 is connected to the coupling portion 132 of the movable body 13a by a third pin 47c. Consequently, with the axis of the third pin 47c set as an action axis M3, the other end side of the ring plate 45, that is, the swash plate 5 is pivotably supported by the movable body 13a around the action axis M3. The action axis M3 extends in parallel to the first and second pivot axes M1 and M2. In this way, the movable body 13a is coupled to the swash plate 5. The movable body 13a comes into contact with the flange 431 of the second supporting member 43b when the inclination angle of the swash plate 5 is the largest.

In the drive shaft main body 30, an axial path 3a extending in the rotational axis O direction from the rear end to the front and a radial path 3b extending in the radial direction from the front end of the axial path 3a and opening to the outer circumferential surface of the drive shaft main body 30 are formed. The rear end of the axial path 3a opens to the pressure regulation chamber 31. On the other hand, the radial path 3b opens to the control pressure chamber 13c. Consequently, the control pressure chamber 13c communicates with the pressure regulation chamber 31 through the radial path 3b and the axial path 3a.

A screw portion 3d is formed at the tip end of the drive shaft main body 30. The drive shaft 3 is connected to a not-shown pulley or electromagnetic clutch via the screw portion 3d.

As shown in FIG. 2, the control mechanism 15 includes a low pressure passage 15a, a high pressure passage 15b, a control valve 15c, an orifice 15d, the axial path 3a, and the radial path 3b.

The low pressure passage 15a is connected to the pressure regulation chamber 31 and the second suction chamber 27b. The control pressure chamber 13c, the pressure regulation chamber 31, and the second suction chamber 27b communicate with one another through the low pressure passage 15a, the axial path 3a, and the radial path 3b. The high pressure passage 15b is connected to the pressure regulation chamber 31 and the second discharge chamber 29b. The control pressure chamber 13c, the pressure regulation chamber 31, and the second discharge chamber 29b communicate with one another through the high pressure passage 15b, the axial path 3a, and the radial path 3b. The orifice 15d is provided in the high pressure passage 15b.

The control valve 15c is provided in the low pressure passage 15a. The control valve 15c is capable of adjusting an opening degree of the low pressure passage 15a on the basis of the pressure in the second suction chamber 27b.

In the compressor, a pipe joined to the evaporator is connected to the suction port 330 shown in FIG. 1. A pipe joined to the condenser is connected to the discharge port 230. The condenser is connected to the evaporator via a pipe and an expansion valve. A refrigerant circuit of an air-conditioning apparatus for a vehicle is configured by the compressor, the evaporator, the expansion valve, the condenser, and the like. Note that illustration of the evaporator, the expansion valve, the condenser, and the pipes are omitted in the figure.

In the compressor configured as explained above, the drive shaft 3 rotates, whereby the swash plate 5 rotates and the pistons 9 reciprocatingly move in the first and second cylinder bores 21a and 23a. Therefore, the first and second compression chambers 21d and 23d cause a capacity change according to a piston stroke. Therefore, in the compressor, a suction stroke for sucking a refrigerant gas into the first and second compression chambers 21d and 23d, a compression stroke in which the refrigerant gas is compressed in the first and second compression chambers 21d and 23d, a discharge stroke in which the compressed refrigerant gas is discharged to the first and second discharge chambers 29a and 29b, and the like are repeatedly performed.

The refrigerant gas discharged to the first discharge chamber 29a reaches the confluent delivery chamber 231 through the first discharge communication path 18. Similarly, the refrigerant gas discharged to the second discharge chamber 29b reaches the confluent delivery chamber 231 through the second discharge communication path 20. The refrigerant gas reached the confluent delivery chamber 231 is discharged to the condenser from the discharge port 230.

When the suction stroke and the like are performed, a piston compression force for reducing the inclination angle of the swash plate 5 acts on a rotating body formed by the swash plate 5, the ring plate 45, the lug arm 49, and the first pin 47a. If the inclination angle of the swash plate 5 is changed, it is possible to perform capacity control by an increase and a decrease of the stroke of the piston 9.

Specifically, in the control mechanism 15, if the control valve 15c shown in FIG. 2 increases the opening degree of the low pressure passage 15a, the pressure in the pressure regulation chamber 31, and by extension, in the control pressure chamber 13c are substantially equal to the pressure in the second suction chamber 27b. Therefore, with the piston compression force acting on the swash plate 5, as shown in FIG.6, in the actuator 13, the movable body 13a moves to the front side of the swash plate chamber 33. Therefore, in the compressor, the movable body 13a approaches the lug arm 49 and the capacity of the control pressure chamber 13c decreases.

Consequently, the other end side of the ring plate 45, that is, the other end side of the swash plate 5 pivots in the clockwise direction around the action axis M3 while resisting an urging force of the second return spring 44b. The rear end of the lug arm 49 pivots in the clockwise direction around the first pivot axis M1 and the front end of the lug arm 49 pivots in the counterclockwise direction around the second pivot axis M2. Therefore, the lug arm 49 approaches the flange 430 of the first supporting member 43a. Consequently, the swash plate 5 pivots with the action axis M3 set as a point of action and with the first pivot axis M1 set as a fulcrum. Therefore, the inclination angle of the swash plate 5 with respect to the rotational axis O of the drive shaft 3 decreases and the stroke of the piston 9 decreases. Therefore, in the compressor, a discharge capacity per one rotation of the drive shaft 3 decreases. Note that the inclination angle of the swash plate 5 shown in FIG. 6 is a minimum inclination angle in the compressor.

In the compressor, the centrifugal force acting on the weight portion 49a is also applied to the swash plate 5. Therefore, in the compressor, the swash plate 5 is easily displaced in a direction for reducing the inclination angle.

The inclination angle of the swash plate 5 decreases, whereby the ring plate 45 comes into contact with the rear end of the first return spring 44a. Consequently, the first return spring 44a is elastically deformed and the rear end of the first return spring 44a approaches the first supporting member 43a.

Here, in the compressor, the inclination angle of the swash plate 5 decreases and the stroke of the piston 9 decreases, whereby the top dead center position of the second head portion 9b moves away from the second valve forming plate 41. Therefore, in the compressor, when the inclination angle of the swash plate 5 approaches a zero degree, compression work is slightly performed on the first compression chamber 21d side. On the other hand, compression work is not performed on the second compression chamber 23d side.

On the other hand, if the control valve 15c shown in FIG. 2 reduces the opening degree of the low pressure passage 15a, the pressure in the pressure regulation chamber 31 increases and the pressure in the control pressure chamber 13c increases. Therefore, in the actuator 13, as shown in FIG. 1, the movable body 13a moves toward the rear end side of the swash plate chamber 33 while resisting the piston compression force acting on the swash plate 5. Therefore, in the compressor, the movable body 13a moves away from the lug arm 49 and the capacity of the control pressure chamber 13c increases.

Consequently, in the action axis M3, the movable body 13a tows the lower end side of the swash plate 5 to the rear side of the swash plate chamber 33 through the coupling portion 132. Consequently, the other end side of the swash plate 5 pivots in the counterclockwise direction around the action axis M3. The rear end of the lug arm 49 pivots in the counterclockwise direction around the first pivot axis M1 and the front end of the lug arm 49 pivots in the clockwise direction around the second pivot axis M2. Therefore, the lug arm 49 separates from the flange 430 of the first supporting member 43a. Consequently, with the action axis M3 and the first pivot axis M1 respectively set as a point of action and a fulcrum, the swash plate 5 pivots in an opposite direction of the direction in which the inclination angle decreases. Therefore, the inclination angle of the swash plate 5 with respect to the rotational axis O of the drive shaft 3 increases and the stroke of the piston 9 increases. Consequently, the discharge capacity per one rotation of the drive shaft 3 increases. Note that the inclination angle of the swash plate 5 shown in FIG. 1 is a maximum inclination angle in the compressor.

In the compressor, the pressure regulation chamber 31 is formed in the rear housing 19. The control mechanism 15 allows the second discharge chamber 29b and the pressure regulation chamber 31 to communicate with each other through the high pressure passage 15b and allows the second suction chamber 27b and the pressure regulation chamber 31 to communicate with each other through the low pressure passage 15a. Consequently, in the compressor, the lubricant included in the refrigerant in the second discharge chamber 29b and the second suction chamber 27b is stored in the pressure regulation chamber 31. As indicated by the solid line arrows in FIG. 5A and FIG.5B, in the compressor, with a pressure difference between the pressure regulation chamber 31 and the second recessed portion 23c , and by extension, between the pressure regulation chamber 31 and the swash plate chamber 33, the refrigerant in the pressure regulation chamber 31 circulates to the swash plate chamber 33 through, besides the third cutouts 630c of the first and second annular members 61a and 61b, a gap between the first annular member 61a and the first recessed strip portion 433, a gap between the second annular member 61b and the second recessed strip portion 434, and the like.

In the compressor, the first annular member 61a moves in the first recessed strip portion 433 and the second annular member 61b moves in the second recessed strip portion 434 on the basis of the pressure difference between the pressure regulation chamber 31 and the swash plate chamber 33. Consequently, in the compressor, it is possible to adjust flow rates of the refrigerant circulating through the gap between the first annular member 61a and the first recessed strip portion 433 and the gap between the second annular member 61b and the second recessed strip portion 434, that is, a flow rate of the refrigerant circulating from the pressure regulation chamber 31 to the swash plate chamber 33.

Specifically, as explained above, if the pressure in the pressure regulation chamber 31 is increased to increase the pressure difference between the pressure regulation chamber 31 and the swash plate chamber 33, as shown in FIG. 5A, the first and second annular members 61a and 61b respectively move forward in the first and second recessed strip portions 433 and 434. Consequently, the first annular member 61a comes into contact with the front wall surface of the first recessed strip portion 433. In this contact place, the gap between the first annular member 61a and the first recessed strip portion 433 is closed. Similarly, the second annular member 61b comes into contact with the front wall surface of the second recessed strip portion 434. In this contact place, the gap between the second annular member 61b and the second recessed strip portion 434 is closed. Consequently, as indicated by the solid line arrows in the figure, the refrigerant in the pressure regulation chamber 31 circulates only through the third cutouts 630c of the first and second annular members 61a and 61b and circulate to the swash plate chamber33. Therefore, the flow rate of the refrigerant circulating from the pressure regulation chamber 31 to the swash plate chamber 33 decreases.

On the other hand, as explained above, if the pressure in the pressure regulation chamber 31 is reduced and the pressure difference between the pressure regulation chamber 31 and the swash plate chamber 33 is reduced, as shown in FIG. 5B, the first and second annular members 61a and 61b respectively move to substantially the centers in the first and second recessed strip portions 433 and 434. Therefore, as indicated by the solid line arrows in the figure, the refrigerant in the pressure regulation chamber 31 circulates through the third cutouts 630c of the first and second annular members 61a and 61b, the gap between the first annular member 61a and the first recessed strip portion 433, and the gap between the second annular member 61b and the second recessed strip portion 434 and circulates to the swash plate chamber 33. That is, compared with a state in which the pressure difference between the pressure regulation chamber 31 and the swash plate chamber 33 is large shown in FIG. 5A, the flow rate of the refrigerant circulating from the pressure regulation chamber 31 to the swash plate chamber 33 increases.

When the refrigerant circulates through the third cutouts 630c and the like in this way, in the compressor, the lubricant stored in the pressure regulation chamber 31 also circulates through the third cutouts 630c and the like together with the refrigerant. Consequently, in the compressor, it is possible to supply the lubricant to the second sliding bearing 22b provided in the second shaft hole 23b. Therefore, in the compressor, it is possible to suitably lubricate a portion between the second sliding bearing 22b and the second supporting member 43b with the supplied lubricant. In this case, in the compressor, as explained above, the first and second annular members 61a and 61b adjust the flow rates of the refrigerant circulating through the gap between the first annular member 61a and the first recessed strip portion 433 and the gap between the second annular member 61b and the second recessed strip portion 434. Accordingly, a supply amount of the lubricant supplied to the second sliding bearing 22b is also adjusted. Therefore, in the compressor, seizure less easily occurs between the second supporting member 43b and the second sliding bearing 22b.

Therefore, the compressor in embodiment 1 displays high durability in the compressor that changes a discharge capacity using the actuator 13.

In particular, in the compressor, the first and second annular members 61a and 61b respectively adjust the flow rates of the refrigerant flowing through the gap between the first annular member 61a and the first recessed strip portion 433 and the gap between the second annular member 61b and the second recessed strip portion 434. Consequently, in the compressor, it is possible to regulate the pressure in the pressure regulation chamber 31 while preventing the refrigerant from circulating from the pressure regulation chamber 31 to the swash plate chamber 33 more than necessary through the gaps and the third cutouts 630c. Therefore, in the compressor, it is easy to change the pressure in the control pressure chamber 13c with the pressure of the refrigerant in the second discharge chamber 29b. It is possible to suitably change the discharge capacity.

As explained above, in the compressor, the first annular member 61a adjusts the flow rate of the refrigerant circulating through the gap between the first annular member 61a and the first recessed strip portion 433 and the second annular member 61b adjusts the flow rate of the refrigerant circulating through the gap between the second annular member 61b and the second recessed strip portion 434. Consequently, in the compressor, the first and second annular members 61a and 61b function as valves that regulate the pressure in the pressure regulation chamber 31. Further, the first and second annular members 61a and 61b also function as valves that adjust the supply amount of the lubricant supplied to the second sliding bearing 22b. In general, since such valves have a complicated configuration and a large size, it is difficult to arrange the valves around the drive shaft 3. On the other hand, in the compressor, a configuration is simple in which the first and second annular members 61a and 61b respectively include the joint gap 63 including the third cutouts 630c functioning as aperture. Therefore, in the compressor, it is possible to cause the first and second annular members 61a and 61b to function as the valves as explained above while arranging the first and second annular members 61a and 61b around the second supporting member 43b.

In the compressor, the joint gap 63 of the first and second annular members 61a and 61b are configured by the first to third cutouts 630a to 630c. As explained above, the third cutouts 630c function as the aperture in the first and second annular members 61a and 61b. Here, when the first and second annular members 61a and 61b are respectively assembled to the first and second recessed strip portions 433 and 434 of the second supporting member 43b, in the first and second cutouts 630a and 630b extending in the axial direction, the width, that is, a channel area in the circulation of the refrigerant and the lubricant easily changes because of tolerance and the like during the assembling besides tolerance of the diameters of the second supporting member 43b and the first and second recessed strip portions 433 and 434. On the other hand, in the third cutouts 630c extending in the circumferential direction, a channel area less easily changes even when the first and second annular members 61a and 61b are assembled to the second supporting member 43b. Therefore, in the compressor, it is possible to suitably adjust the flow rate of the refrigerant circulating from the pressure regulation chamber 31 to the swash plate chamber 33. It is also possible to suitably adjust the supply amount of the lubricant supplied to the second sliding bearing 22b and the like.

Further, in the compressor, since the first and second annular members 61a and 61b are made of PEEK, friction and the like are less easily caused even by a load and oil resistance is high. The first and second annular members 61a and 61b are also excellent in affinity to the lubricant.

Further, in the compressor, since the first annular member 61a and the second annular member 61b are provided in the second supporting member 43b, the first and second annular members 61a and 61b are capable of adjusting a load that acts during actuation of the compressor. Consequently, in the compressor, durability of the first and second annular members 61a and 61b is high.

In the compressor, the outer diameters of the first and second annular members 61a and 61b and the outer diameters of the second sliding bearing 22b are formed substantially the same. Therefore, in the compressor, the first and second annular members 61a and 61b suitably come into slide contact with the inner circumferential surface of the second shaft hole 23b and the second sliding bearing 22b suitably comes into slide contact with the inner circumferential surface of the second shaft hole 23b. Consequently, in the compressor, both of the first and second annular members 61a and 61b and the second sliding bearing 22b suitably function.

Further, in the compressor, in the second shaft hole 23b, the second sliding bearing 22b is arranged further on the pressure regulation chamber 31 side than the first and second annular members 61a and 61b. The rear end of the second sliding bearing 22b faces the pressure regulation chamber 31. Consequently, in the compressor, it is possible to suitably lubricate the second sliding bearing 22b with the lubricant in the pressure regulation chamber 31.

In the compressor, the drive shaft 3 is configured by the drive shaft main body 30 and first and second supporting members 43a and 43b. Therefore, in the compressor, it is possible to suppress complication of the shape of the drive shaft main body 30 and easily manufacture the drive shaft 3. Since the first and second annular members 61a and 61b are provided in the second supporting member 43b, it is easy to provide the first and second annular members 61a and 61b in the drive shaft 3.

### (Embodiment 2)

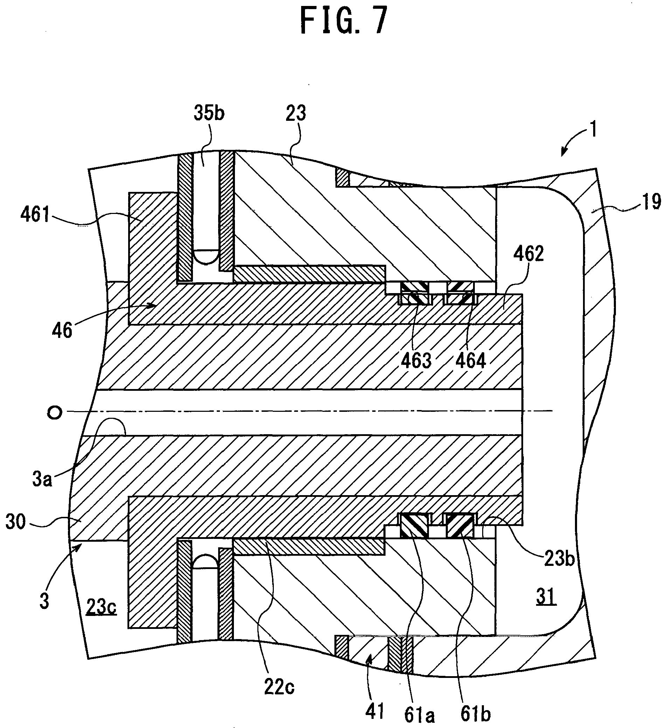

In a compressor in embodiment 2, a second supporting member 46 shown in FIG. 7 is pressed into the drive shaft main body 30 instead of the second supporting member 43b in the compressor in embodiment 1. Consequently, in the compressor, the drive shaft 3 is configured by the drive shaft main body 30, the first supporting member 43a, and the second supporting member 46.

In the compressor, a second sliding bearing 22c is provided in the second shaft hole 23b instead of the second sliding bearing 22b. The second sliding bearing 22c is also equivalent to the radial bearing in the present invention. Note that a roller bearing may be provided instead of the second sliding bearing 22c.

The second supporting member 46 is pressed into the rear end side of the drive shaft main body 30 and located in the second shaft hole 23b. The second supporting member 46 is also equivalent to the cap in the present invention. A flange 461 is formed at the front end of the second supporting member 46. The flange 461 projects into the second recessed portion 23c and is in contact with the second thrust bearing 35b. The movable body 13a comes into contact with the flange 461 when the inclination angle of the swash plate 5 is the largest.

A reduced diameter portion 462 is formed on the rear end side of the second supporting member 46. In the reduced diameter portion 462, first and second recessed strip portions 463 and 464 concentric with the rotational axis O are recessed. In the first recessed strip portion 463, as in the compressor in embodiment 1, the first annular member 61a is arranged. In the second recessed strip portion 464, the second annular member 61b is arranged. Consequently, the first and second annular members 61a and 61b are located between the second supporting member 46 and the second shaft hole 23b. The rear end of the second supporting member 46, that is, the reduced diameter portion 462 projects into the pressure regulation chamber 31.

The second sliding bearing 22c is located on the front end side of the second shaft hole 23b. The inner diameter of the second sliding bearing 22c is formed substantially the same as the outer diameter of the first annular member 61a and the outer diameter of the second annular member 61b. In the compressor, as explained above, the first and second annular members 61a and 61b are provided in the first and second recessed strip portions 463 and 464 and located on the rear end side of the second supporting member 46. Consequently, in the compressor, in the second shaft hole 23b, the first and second annular members 61a and 61b are arranged further on the pressure regulation chamber 31 side than the second sliding bearing 22c. A portion between the second shaft hole 23b and the second supporting member 46, the first and second recessed strip portions 463 and 464, and the third cutouts 630c function as the communication path in the present invention. The other components in the compressor are the same as the components in the compressor in embodiment 1. The same components are denoted by the same reference numerals and signs and detailed explanation concerning the components is omitted.

In the compressor, as explained above, the first and second annular members 61a and 61b are arranged further on the pressure regulation chamber 31 side than the second sliding bearing 22c. In this regard, in the compressor, as in the compressor in embodiment 1, the refrigerant and the lubricant circulate through, besides the third cutouts 630c, the gap between the first annular member 61a and the first recessed strip portion 463, the gap between the second annular member 61b and the second recessed strip portion 464, and the like. Therefore, the second sliding bearing 22c and the like are suitably lubricated. Therefore, in the compressor, as in the compressor in embodiment 1, seizure less easily occurs between the second supporting member 46 and the second sliding bearing 22c.

In the compressor, the outer diameters of the first and second annular members 61a and the inner diameter of the second sliding bearing 22c are formed substantially the same. Therefore, in the compressor, the first and second annular members 61a and 61b suitably come into slide contact with the inner circumferential surface of the second shaft hole 23b and the second supporting member 46 and the inner circumferential surface of the second sliding bearing 22c suitably come into slide contact with each other. Therefore, in the compressor, as in the compressor in embodiment 1, both of the first and second annular members 61a and 61b and the second sliding bearing 22c suitably function. The other action in the compressor is the same as the action in the compressor in embodiment 1.

### (Embodiment 3)

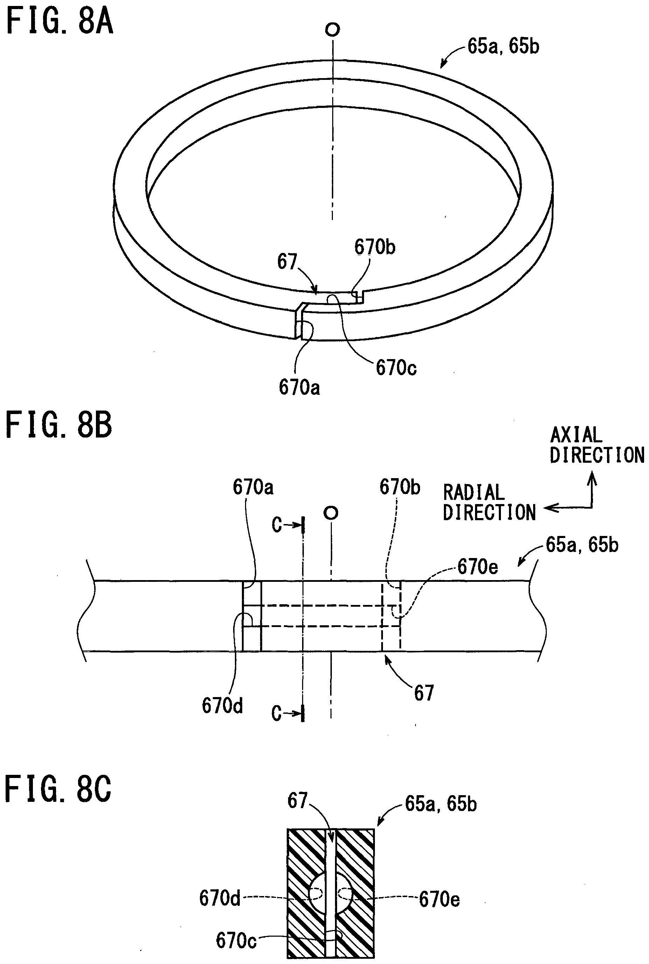

In a compressor in embodiment 3, first and second annular members 65a and 65b shown in FIG. 8A are adopted instead of the first and second annular members 61a and 61b in the compressor in embodiment 1. The first and second annular members 65a and 65b are also made of PEEK. The first and second annular members 65a and 65b are also respectively accommodated in the first and second recessed strip portions 433 and 434 and located between the second supporting member 43b and the second shaft hole 23b.

The first and second annular members 65a and 65b have the same configuration and respectively include joint gap 67. The configuration is explained below with reference to the joint gap 67 of the first annular member 65a as an example.

As shown in FIGS. 8A and 8B, the joint gap 67 is formed by first to third cutouts 670a to 670c and a pair of communication grooves 670d and 670e. The first cutout 670a extends in the axial direction of the first annular member 65a. The second cutout 670b extends in the axial direction of the first annular member 65a while shifting in the circumferential direction with respect to the first cutout 670a. The third cutout 670c extends in the circumferential direction in the center of the thickness direction of the first annular member 65a and is continuous to the first cutout 670a and the second cutout 670b. As shown in FIG. 8C, the communication grooves 670d and 670e are formed in a substantially semicircular shape in a cross section parallel to the axial direction. The communication grooves 670d and 670e extend along the third cutout 670c while being opposed to each other across the third cutout 670c and are respectively continuous to the first cutout 670a and the second cutout 670b.

The first and second annular members 65a and 65b are respectively provided in the first and second recessed strip portions 433 and 434, whereby the third cutout 670c allows the pressure regulation chamber 31 and the swash plate chamber 33 to always communicate with each other. Like the first and second annular members 61a and 61b, the third cutout 670c is formed to have a small channel area for the refrigerant and the like compared with the first and second cutouts 670a and 670b. Consequently, the third cutout 670c functions as an aperture in the first and second annular members 65a and 65b. The portion between the second shaft hole 23b and the second supporting member 43b, the first and second recessed strip portions 433 and 434, and the third cutouts 670c function as the communication path in the present invention. Note that the annular members 65a and 65b may be formed by metal or the like. The other components in the compressor are the same as the components in the compressor in embodiment 1.

The first and second annular members 65a and 65b act the same as the first and second annular members 61a and 61b in the compressor in embodiment 1. Here, in the first and second annular members 65a and 65b, flow rates of the refrigerant and the lubricant can also be adjusted by the communication grooves 670d and 670e. The other action in the compressor is the same as the action in the compressor in embodiment 1.

The present invention is explained above according to embodiments 1 to 3. However, the present invention is not limited to embodiments 1 to 3. It goes without saying that the present invention can be changed as appropriate and applied without departing from the spirit of the present invention.

For example, in the compressor in embodiment 1, only the first annular member 61a may be provided in the second supporting member 43b. Three or more annular members may be provided in the second supporting member 43b. The same applies to the compressors in embodiments 2 and 3.

The first and second annular members 65a and 65b in the compressor in embodiment 3 may be provided in the compressor in embodiment 2.

Further, concerning the control mechanism 15, the control valve 15c may be provided in the high pressure passage 15b and the orifice 15d may be provided in the low pressure passage 15a. In this case, it is possible to adjust the opening degree of the high pressure passage 15b with the control valve 15c. Consequently, it is possible to quickly increase the pressure in the control pressure chamber 13c with the high pressure in the second discharge chamber 29b and quickly increase a compression capacity.

The compressor may be configured such that a compression chamber is formed only in one of the first cylinder block 21 and the second cylinder block 23.

The annular member is preferably formed by resin such as PEEK (polyether ether ketone), PPS (polyphenylene sulfide), or PTFE (polytetrafluoroethylene) or metal. On the other hand, for example, a member that seals the communication path and blocks circulation of the refrigerant and the lubricant like an O-ring made of rubber is not included in the annular member in the present invention.

## Claims

1. A variable displacement swash plate type compressor comprising:
a housing (1) in which a suction chamber (27), a discharge chamber (29), a swash plate chamber (33), and a cylinder bore (21) are formed;
a drive shaft (3) rotatably supported by the housing;
a swash plate (5) rotatable in the swash plate chamber by rotation of the drive shaft;
a link mechanism (7) provided between the drive shaft and the swash plate and configured to allow a change in an inclination angle of the swash plate with respect to a direction orthogonal to a rotational axis of the drive shaft;
a piston (9) accommodated to be reciprocatingly movable in the cylinder bore;
a conversion mechanism configured to reciprocatingly move the piston in the cylinder bore at a stroke corresponding to the inclination angle according to the rotation of the swash plate;
an actuator (13) capable of changing the inclination angle; and
a control mechanism (15) configured to control the actuator,
wherein
the swash plate chamber communicates with the suction chamber,
the actuator includes:
a fixed body (13b) fixed to the drive shaft in the swash chamber;
a movable body (13a) movable in the rotational axis direction in the swash plate chamber; and
a control pressure chamber (13c) defined by the fixed body and the movable body and configured to introduce a refrigerant including lubricant in the discharge chamber to thereby move the movable body,
in the housing, a pressure regulation chamber (31) that communicates with the discharge chamber and the control pressure chamber and a shaft hole that allows the swash plate chamber and the pressure regulation chamber to communicate with each other are formed,
in the shaft hole, a bearing rotatably supporting the drive shaft is arranged,
a communication path that allows the pressure regulation chamber and the swash plate chamber to communicate with each other via the bearing is provided between the drive shaft and the shaft hole,
in the communication path, an annular member arranged around the drive shaft is provided,
the annular member (61) includes an aperture (630, 670) that allows the pressure regulation chamber and the swash plate chamber to always communicate with each other, and
the annular member moves in the communication path on a basis of a pressure difference between the pressure regulation chamber and the swash plate chamber to thereby adjust a flow rate of the refrigerant circulating through the communication path.

2. The variable displacement swash plate type compressor according to claim 1, wherein
the communication path includes a recessed strip portion formed between the drive shaft and the shaft hole, and
the annular member is arranged in the recessed strip portion.

3. The variable displacement swash plate type compressor according to claim 1 or 2, wherein
the annular member includes a first cutout extending in an axial direction parallel to the rotational axis, a second cutout extending in the axial direction in an extending direction of the first cutout while shifting with respect to the first cutout in a circumferential direction orthogonal to the axial direction, and a third cutout extending in the circumferential direction to connect the first cutout and the second cutout, and
the third cutout is the aperture.

4. The variable displacement swash plate type compressor according to any one of claims 1 to 3, wherein
the bearing is a radial bearing provided between the drive shaft and the shaft hole,
the annular member and the radial bearing are provided around the drive shaft and arranged between the pressure regulation chamber and the swash plate chamber, and
the radial bearing is arranged further on the pressure regulation chamber side than the annular member.

5. The variable displacement swash plate type compressor according to any one of claims 1 to 3, wherein
the bearing is a radial bearing provided between the drive shaft and the shaft hole,
the annular member and the radial bearing are provided around the drive shaft and arranged between the pressure regulation chamber and the swash plate chamber, and
the annular member is arranged further on the pressure regulation chamber side than the radial bearing.

6. The variable displacement swash plate type compressor according to claim 4 or 5, wherein an outer diameter of the annular member is substantially the same as an outer diameter or an inner diameter of the radial bearing.

7. The variable displacement swash plate type compressor according to claim 4 or 5, wherein an inner diameter of the annular member is substantially the same as an outer diameter or an inner diameter of the radial bearing.

8. The variable displacement swash plate type compressor according to any one of claims 1 to 7, wherein a plurality of the annular members are provided.

9. The variable displacement swash plate type compressor according to claim 2, wherein the drive shaft includes a drive shaft main body and a cap fit in the drive shaft main body, the recessed strip portion being recessed in the cap.

## Patentansprüche

1. Verstellkompressor der Taumelscheiben-Bauart, der folgendes aufweist:
ein Gehäuse (1), in dem eine Saugkammer (27), eine Auslasskammer (29) eine Taumelscheibenkammer (33) und eine Zylinderbohrung (21) ausgestaltet sind;
eine vom Gehäuse drehbar gelagerte Antriebswelle (3);
eine durch Drehung der Antriebswelle in der Taumelscheibenkammer drehbare Taumelscheibe (5);
eine Verbindungseinrichtung (7), die zwischen der Antriebswelle und der Taumelscheibe vorgesehen ist und dazu angepasst ist, eine Änderung in einem Neigungswinkel der Taumelscheibe bezüglich einer Richtung orthogonal zu einer Rotationsachse der Antriebswelle zuzulassen;
einen Kolben (9), der angepasst ist, sich in der Zylinderbohrung hin- und her zu bewegen;
ein Umwandlungsmechanismus, der dazu angepasst ist, den Kolben in der Zylinderbohrung in einem dem Neigungswinkel, der von der Drehung der Taumelscheibe abhängt, entsprechenden Hub hin- und herzu bewegen;
einen Aktor (13), der zur Änderung des Neigungswinkels geeignet ist; und eine Steuervorrichtung (15), die dazu angepasst ist, den Aktor zu steuern, umfasst,
wobei
die Taumelscheibenkammer mit der Saugkammer in Verbindung steht,
der Aktor folgendes aufweist:
einen Fixkörper (13b), der an der Antriebswelle in der Taumelkammer befestigt ist;
einen in Richtung der Rotationsachse in der Taumelscheibenkammer beweglichen Körper (13a); und
eine Steuerdruckkammer (13c), die durch den Fixkörper und den beweglichen Körper definiert ist und dazu angepasst ist, ein Kühlmittel einschließlich Schmiermittel in die Auslasskammer einzuleiten, um dabei den beweglichen Körper zu bewegen wobei,
im Gehäuse eine Druckregulierungskammer (31), die mit der Auslasskammer und der Steuerdruckkammer in Verbindung steht, und ein Wellenloch, das der Taumelscheibenkammer und der Druckregulierungskammer ermöglicht, miteinander in Verbindung zu stehen, ausgestaltet sind, wobei
im Wellenloch ein Lager, das die Antriebswelle drehbar trägt, angeordnet ist,
ein Verbindungsweg, der der Druckregulierungskammer und der Taumelscheibenkammer ermöglicht, über das Lager miteinander in Verbindung zu stehen, zwischen der Antriebswelle und dem Wellenloch vorgesehen ist,
in dem Verbindungsweg ein ringförmiges Teil, das um die Antriebswelle herum angeordnet ist, vorgesehen ist,
das ringförmige Teil (61) eine Öffnung (630, 670), die der Druckregulierungskammer und der Taumelscheibenkammer ermöglicht, immer miteinander in Verbindung zu stehen, enthält und
das ringförmige Teil sich aufgrund der Druckdifferenz zwischen der Druckregulierungskammer und der Taumelscheibenkammer im Verbindungsweg bewegt, um dabei eine Flussrate des Kühlmittels, das durch den Verbindungsweg zirkuliert, anzupassen.

2. Verstellkompressor der Taumelscheiben-Bauart nach Anspruch 1, wobei der Verbindungsweg einen zurückgesetzten Bandabschnitt, der zwischen der Antriebswelle und dem Wellenloch ausgestaltet ist, enthält und das ringförmige Teil in dem zurückgesetzten Bandabschnitt angeordnet ist.

3. Verstellkompressor der Taumelscheiben-Bauart nach Anspruch 1 oder 2, wobei das ringförmige Teil einen ersten Ausschnitt, der sich in eine axiale Richtung parallel zu der Rotationsachse erstreckt, einen zweiten Ausschnitt, der sich in die axiale Richtung in einer verlängerten Richtung des ersten Ausschnitts erstreckt während er sich in Bezug zum ersten Ausschnitt in eine umlaufende Richtung orthogonal zu der axialen Richtung verschiebt, und einen dritten Ausschnitt, der sich in die umlaufende Richtung erstreckt um den ersten Ausschnitt und den zweiten Ausschnitt zu verbinden, enthält und
der dritte Ausschnitt die Öffnung ist.

4. Verstellkompressor der Taumelscheiben-Bauart nach einem der Ansprüche 1 bis 3, wobei
das Lager ein Radiallager ist, das zwischen der Antriebswelle und dem Wellenloch vorgesehen ist,
das ringförmige Teil und das Radiallager um die Antriebswelle herum vorgesehen sind und zwischen der Druckregulierungskammer und der Taumelscheibenkammer angeordnet sind, und
das Radiallager weiter auf der Seite der Druckregulierungskammer angeordnet ist als das ringförmige Teil.

5. Verstellkompressor der Taumelscheiben-Bauart nach einem der Ansprüche 1 bis 3, wobei
das Lager ein Radiallager ist, das zwischen der Antriebswelle und dem Wellenloch vorgesehen ist,
das ringförmige Teil und das Radiallager um die Antriebswelle herum vorgesehen sind und zwischen der Druckregulierungskammer und der Taumelscheibenkammer angeordnet sind, und
das ringförmige Teil weiter auf der Seite der Druckregulierungskammer angeordnet ist als das Radiallager.

6. Verstellkompressor der Taumelscheiben-Bauart nach Anspruch 4 oder 5, wobei ein äußerer Durchmesser des ringförmigen Teils einem äußeren Durchmesser oder inneren Durchmesser des Radiallagers im Wesentlichen gleich ist.

7. Verstellkompressor der Taumelscheiben-Bauart nach Anspruch 4 oder 5, wobei ein innerer Durchmesser des ringförmigen Teils einem äußeren Durchmesser oder inneren Durchmesser des Radiallagers im Wesentlichen gleich ist.

8. Verstellkompressor der Taumelscheiben-Bauart nach einem der Ansprüche 1 bis 7, wobei eine Vielzahl an ringförmigen Teilen vorgesehen ist.

9. Verstellkompressor der Taumelscheiben-Bauart nach Anspruch 2, wobei die Antriebswelle einen Antriebswellenhauptkörper und eine Kappe enthält, die in den Antriebswellenhauptkörper eingepasst ist und der zurückgesetzte Bandabschnitt in die Kappe zurückgesetzt ist.

## Revendications

1. Compresseur de type à plateau oscillant à déplacement variable comprenant :
un logement (1) dans lequel une chambre d'aspiration (27), une chambre d'évacuation (29), une chambre de plateau oscillant (33) et un alésage de cylindre (21) sont formés ;
un arbre d'entraînement (3) supporté en rotation par le logement ;
un plateau oscillant (5) en rotation dans la chambre de plateau oscillant par la rotation de l'arbre d'entraînement ;
un mécanisme de lien (7) ménagé entre l'arbre d'entraînement et le plateau oscillant et configuré pour permettre un changement d'un angle d'inclinaison du plateau oscillant par rapport à une direction orthogonale à un axe de rotation de l'arbre d'entraînement ;
un piston (9) disposé pour être mobile de façon réciproque dans l'alésage du cylindre ;
un mécanisme de conversion configuré pour déplacer de façon réciproque le piston dans l'alésage du cylindre sur une course correspondant à l'angle d'inclinaison en fonction de la rotation du plateau oscillant ;
un actionneur (13) capable de changer l'angle d'inclinaison ; et
un mécanisme de contrôle (15) configuré pour contrôler l'actionneur, dans lequel
la chambre de plateau oscillant communique avec la chambre d'aspiration,
l'actionneur inclut :
un corps fixe (13b) fixé à l'arbre d'entraînement dans la chambre de plateau oscillant ;
un corps déplaçable (13a) déplaçable dans la direction de l'axe de rotation dans la chambre de plateau oscillant ; et
une chambre de pression de contrôle (13c) définie par le corps fixe et le corps mobile et configurée pour introduire un réfrigérant incluant un lubrifiant dans la chambre d'évacuation pour ainsi déplacer le corps mobile,
dans le logement, une chambre de régulation de pression (31) qui communique avec la chambre d'évacuation et la chambre de pression de contrôle et un trou d'arbre qui permet à la chambre de plateau oscillant et à la chambre de régulation de pression de communiquer l'une avec l'autre sont formés,
dans le trou d'arbre, un palier supportant en rotation l'arbre d'entraînement est disposé,
un chemin de communication qui permet à la chambre de régulation de pression et la chambre de plateau oscillant de communiquer entre elles via le palier est ménagé entre l'arbre d'entraînement et le trou d'arbre,
dans le chemin de communication, une membrure annulaire disposée autour de l'arbre d'entraînement est ménagée,
la membrure annulaire (61) inclut une ouverture (630, 670) qui permet à la chambre de régulation de pression et à la chambre de plateau oscillant de toujours communiquer l'une avec l'autre, et
la membrure annulaire se déplace dans le chemin de communication en fonction d'une différence de pression entre la chambre de régulation de pression et la chambre de plateau oscillant pour ainsi ajuster un débit de réfrigérant circulant dans le chemin de communication.

2. Compresseur du type à plateau oscillant à déplacement variable selon la revendication 1, dans lequel
le chemin de communication inclut une portion de bande renfoncée formée entre l'arbre d'entraînement et le trou d'arbre, et
la membrure annulaire est disposée dans la portion de bande renfoncée.

3. Compresseur du type à plateau oscillant à déplacement variable selon la revendication 1 ou 2, dans lequel
la membrure annulaire inclut une première découpe s'étendant dans une direction axiale parallèle à l'arbre de rotation, une seconde découpe s'étendant dans la direction axiale dans une direction d'extension de la première découpe tout en se décalant par rapport à la première découpe dans une direction circonférentielle orthogonale à la direction axiale, et une troisième découpe s'étendant dans la direction circonférentielle pour connecter la première découpe et la seconde découpe, et
la troisième découpe est l'ouverture.

4. Compresseur du type à plateau oscillant à déplacement variable selon l'une quelconque des revendications 1 à 3, dans lequel
le palier est un palier radial disposé entre l'arbre d'entraînement et le trou d'arbre,
la membrure annulaire et le palier radial sont disposés autour de l'arbre d'entraînement et disposés entre la chambre de régulation de pression et la chambre de plateau oscillant, et
le palier radial est disposé plus loin du côté chambre de régulation de pression que la membrure annulaire.

5. Compresseur du type à plateau oscillant à déplacement variable selon l'une quelconque des revendications 1 à 3, dans lequel
le palier est un palier radial disposé entre l'arbre d'entraînement et le trou d'arbre,
la membrure annulaire et le palier radial sont disposés autour de l'arbre d'entraînement et disposés entre la chambre de régulation de pression et la chambre de plateau oscillant, et
la membrure annulaire est disposée plus loin du côté chambre de régulation de pression que le palier radial.

6. Compresseur du type à plateau oscillant à déplacement variable selon la revendication 4 ou 5, dans lequel un diamètre extérieur de la membrure annulaire est pour l'essentiel le même qu'un diamètre extérieur ou un diamètre intérieur du palier radial.

7. Compresseur du type à plateau oscillant à déplacement variable selon la revendication 4 ou 5, dans lequel un diamètre intérieur de la membrure annulaire est pour l'essentiel le même qu'un diamètre extérieur ou un diamètre intérieur du palier radial.

8. Compresseur du type à plateau oscillant à déplacement variable selon l'une quelconque des revendications 1 à 7, dans lequel une pluralité de membrures annulaires sont disposées.

9. Compresseur du type à plateau oscillant à déplacement variable selon la revendication 2, dans lequel l'arbre d'entraînement inclut un corps principal d'arbre d'entraînement et un capuchon ajusté dans le corps principal d'arbre d'entraînement, la portion de bande renfoncée étant renfoncée dans le capuchon.
